Europäisches Patentamt

European Patent Office

Office européen des brevets

(19)

(11) Veröffentlichungsnummer: **0 452 622 B1**

(12) **EUROPÄISCHE PATENTSCHRIFT**

(45) Veröffentlichungstag der Patentschrift: **28.12.94**

(51) Int. Cl.⁵: **F16F 1/38**

(21) Anmeldenummer: **91101582.4**

(22) Anmeldetag: **06.02.91**

(54) **Gummimetallagerung für einen Biegebalken.**

(30) Priorität: **20.04.90 DE 4012599**

(43) Veröffentlichungstag der Anmeldung:
**23.10.91 Patentblatt 91/43**

(45) Bekanntmachung des Hinweises auf die
Patenterteilung:
**28.12.94 Patentblatt 94/52**

(84) Benannte Vertragsstaaten:
**AT DE FR IT NL SE**

(56) Entgegenhaltungen:
**FR-A- 2 351 320**     **US-A- 3 078 969**
**US-A- 3 078 971**     **US-A- 3 893 775**
**US-A- 4 128 355**     **US-A- 4 447 034**

(73) Patentinhaber: **Jörn GmbH**
**Porschestrasse 10**
**D-70736 Fellbach (DE)**

Patentinhaber: **MAN Nutzfahrzeuge Aktienge-**
**sellschaft**
**Postfach 50 06 20**
**D-80976 München (DE)**

(72) Erfinder: **Zawadzki, Bernd, Dipl.-Ing.**
**Füllfässle 9**
**W-7054 Korb (DE)**
Erfinder: **Stummer, Josef, Dipl.-Ing.**
**Glockenbecherstrasse 16a**
**W-8000 München 45 (DE)**
Erfinder: **Übelacker, Andreas, Dipl.-Ing.**
**Am Kindergarten 3**
**W-8061 Röhrmoos (DE)**

(74) Vertreter: **Neubauer, Hans-Jürgen, Dipl.-Phys.**
**Fauststrasse 30**
**D-85051 Ingolstadt (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung betrifft eine Gummimetallagerung für einen Biegebalken gemäß dem Oberbegriff des Anspruchs 1.

Bei der Lagerung eines Biegebalkens, insbesondere bei einer Mittenlagerung, besteht das technische Problem, daß sich die Biegekräfte auf die Lager- und Halteelemente übertragen. Bei starren Lagerelementen ist ein sehr hoher Einspanndruck erforderlich, der einerseits zu hohen Belastungen des Biegebalkens im Einspannbereich führt, da dann dort die Durchbiegung unterbunden ist und andererseits in diesem Bereich die Biegefunktion eines Biegebalkens durch die Versteifung behindert ist. Starre, unnachgiebige Lager- und Einspannelemente sind daher zur Festlegung eines Biegebalkens oft nicht einsetzbar.

Es ist bekannt (US-PS 2 856 216), ein Lagerinnenteil über Elastomerkörper in einem zusammenspannbaren Gehäuse mit definierter Vorspannung zu halten. Das Lagerinnenteil besteht hier aus einem zylindrischen Lagerbolzen, der mit einem zu lagernden Teil verbunden ist, das gegenüber einem mit dem Gehäuse verbundenen Teil elastisch und schwingungsdämpfend gelagert ist. Während es bei der Lagerung und Halterung eines Biegebalkens in der Regel darauf ankommt, diesen möglichst stabil und ortsfest zu halten, sind beim elastischen Lager nach dem Stand der Technik größere Relativbewegungen zwischen den Lagerteilen aufgrund der gewünschten Funktion zulässig und erforderlich; zudem soll der innere Lagerbolzen nicht biegsam in der Art eines Biegebalkens sein.

Weiter ist ein Gummimetallager gemäß dem Oberbegriff des Anspruchs 1 aus der GB-A-945 860 bekannt.

Die Aufgabe der Erfindung wird darin gesehen, eine stabile Lagerung für einen Biegebalken zu schaffen, die diesen an der Lagerstelle nur wenig belastet.

Diese Aufgabe wird mit den Merkmalen des Anspruchs 1 gelöst.

Gemäß Anspruch 1 ist das Gehäuse geteilt. Die beiden Halbschalen sind, um den im Querschnitt rechteckigen Biegebalken kraftschlüssig mit definierter Vorspannung zu halten, U-profilförmig ausgebildet. Die als Gummi-Metallelemente ausgebildeten Halbschalen sind jeweils mit einem zwischen Biegebalkenoberfläche und innerer Metallschicht angeordneten dünnen, mit der inneren Metallschicht fest verbundenen Elastomerfilm versehen. Es besteht keine Verbindung zwischen den jeweils in einer Halbschale angeordneten Elastomerschichten. Die erste innere Metallschicht weist im Bereich der seitlichen U-Schenkel wenigstens eine schlitzförmige, quer zur Längserstreckung verlaufende Unterbrechung auf, die die innere Metallschicht vollständig durchsetzt und an dem der U-Basis abgewandten Ende des jeweiligen U-Schenkelbereichs der inneren Metallschicht offen ausläuft.

Vorteilhaft wird bei einer solchen Einspannung ein Biegebalken durch Kraftschluß gehalten, wobei die Normalkräfte auf den Biegebalken durch die definierte Kompression des Elastomers erzeugt werden, wobei gleichzeitig die Relativbewegungen zwischen Biegebalken und fester Einspannung bzw. Gehäuse im Elastomer molekular aufgenommen werden. Eine Versteifung des Biegebalkens im Einspannbereich wird reduziert, so daß der Biegebalken über seine gesamte konstruktive Länge ausgenützt werden kann. Flächen- und Kantenpressungen im Einspannbereich werden ebenso wie die Belastung durch eine elastische Aufnahme aufgezwungener Auslenkungen reduziert. Weiter werden Stöße elastisch gedämpft übertragen und Körperschall weniger stark weitergeleitet.

Durch die wenigstens eine schlitzförmige Unterbrechung der inneren Metallschicht im Bereich der seitlichen U-Schenkel werden betriebsmäßige Verformungen, entsprechend den Verformungen des Biegebalkens in der Metallschicht, reduziert. Je nach Gegebenheiten können mehrere Unterbrechungen bzw. segmentartige Aufteilungen notwendig werden. Die äußere Metallschicht bleibt dagegen unbeweglich und fest im Gehäuse gehalten, so daß dort solche Unterbrechungen nicht erforderlich werden.

Gemäß Anspruch 2 kann für eine weitere Reduzierung der betriebsmäßigen Verformung die wenigstens eine schlitzförmige Unterbrechung auch über die U-Profilbasis durchgehend ausgeführt sein, so daß die innere Metallschicht jeder Halbschale aus wenigstens zwei im Elastomermaterial eingebettete Metall-Halbschalen oder aus noch mehreren segmentartig getrennten Halbschalenteilen besteht. Damit wird die Verformung des Biegebalkens im Einspannbereich auf nur geringe Flächen der inneren Metallschicht übertragen, so daß dort kaum noch Verformungen in der Metallschicht auftreten, wodurch die Lebensdauer erhöht wird.

Auch die Merkmale des Anspruchs 3 sollen dazu beitragen, mögliche Verformungen in der inneren Metallschicht besser aufnehmen zu können.

Um eine ungestörte Bewegung zu ermöglichen und um Toleranzen auszugleichen, wird mit Anspruch 4 vorgeschlagen, die Längsränder der U-Schenkel der Federhalbschalen über einen Spalt getrennt zu halten.

Durch das Vorstehen und Aneinanderliegen der gegenüberliegenden Längsränder der äußeren Metallschichten nach Anspruch 5 wird eine verbesserte Fixierung der Halbschalen im Gehäuse erreicht. Um eine Überbestimmung beim Zusammenspannen des Gehäuses zu vermeiden, sind die Längsränder an ihren Anlagen bevorzugt mit einer Gummiauflage versehen, die Toleranzen elastisch ausgleicht. Diese Gummiauflage ergibt sich bei einer geeigneten Ausbildung der Entformungsschrägen in diesem Bereich.

Gemäß Anspruch 6 ist es zweckmäßig, das Aufnahmegehäuse im Bereich dieser Längsränder geteilt auszuführen und die Gehäusekanten mit Einführschrägen zur Vereinfachung der Montage auszuführen.

Die stirnseitigen Endbereiche der Gummischicht sind betriebsmäßig ersichtlich am meisten belastet. Zur Reduzierung der dort auftretenden Kantenpressung wird daher vorgeschlagen, das dort zur Verfügung stehende Elastomermaterial entweder durch eine in Querrichtung geeignet strukturierte Kontur oder durch eine zu den Längsenden hin abnehmende Stärke zu verringern. Die Kontur kann trapezförmig, parabel- oder hyperbelförmig oder rechteckig mit einer Mittenausnehmung in verschiedener Form sein. Diese Merkmale betreffen Ausführungen, bei denen das Gehäuse gerade und eben verlaufende Anlageflächen zu den Halbschalen hin aufweist.

Bei einem Gehäuse, das im Längsschnitt gesehen an den Anlageflächen zu den Halbschalen konvex ausgebildet ist (mit entsprechender Ausbildung der äußeren Metallschicht der Halbschalen) soll nach Anspruch 9 auch die Elastomerschicht zu den Längsenden hin sowohl im Herstellzustand als auch im Einbauzustand in ihrer Stärke zunehmen. Dabei können auch die Maßnahmen zur Reduzierung der Kantenpressung entsprechend der Ansprüche 7 und 8 sinngemäß berücksichtigt werden.

Mit den in Anspruch 10 beanspruchten Dichtlippen an den Längsenden des Elastomerfilms wird das Eindringen von Partikeln und Flüssigkeiten in den Anlagebereich zwischen dem Elastomerfilm und dem Biegebalken verhindert und diese Flächen gegen Abrieb geschützt.

In einer besonders bevorzugten Ausführung nach Anspruch 11 werden die seitlichen Elastomerschichten und entsprechend die äußere Metallschicht zu den U-Schenkelrändern hin konisch auseinanderlaufend ausgeführt. Damit wird dieser konische Bereich beim Einsetzen in das (nicht konische) Gehäuse zusammengepreßt und vorteilhaft auch in den Seitenbereichen eine Vorspannung im Elastomermaterial mit den zur Erhöhung der Lebensdauer bekannten Vorteilen geschaffen.

Da die seitlichen und mittleren Elastomerschichten ohnehin voneinander getrennt sind, ist es nach Anspruch 12 einfach möglich, diese mit unterschiedlichem Elastomermaterial verschiedener Elastomerhärten zur Anpassung an die vorliegenden Gegebenheiten auszuführen.

Um Relativbewegungen zwischen dem inneren Elastomerfilm und der Anlagefläche des Biegebalkens, die zu einer schnellen Zerstörung der Gummimetallagerung führen würden, zu vermeiden, muß der Elastomerfilm eine Mindeststärke aufweisen. Diese Mindeststärke ist durch die in Anspruch 13 angegebene Beziehung bestimmt.

Anhand eines Ausführungsbeispiels wird die Erfindung mit weiteren Einzelheiten, Merkmalen und Vorteilen näher erläutert.

Es zeigen

Fig. 1    eine Ansicht in Axialrichtung einer als Gummi-Metallelement ausgebildeten Halbschale im Herstellzustand,

Fig. 2    eine teilweise geschnittene Draufsicht auf die Halbschale nach Fig. 1,

Fig. 3    einen Längsschnitt der Halbschale nach Fig. 1 entlang der Linie A-A,

Fig. 4    eine Ansicht der Halbschale nach Fig. 1 von unten in Richtung des Pfeiles B,

Fig. 5    eine Ansicht in Axialrichtung einer Gummimetallagerung mit einem quer geschnittenen Biegebalken im eingebauten Zustand mit zwei Halbschalen,

Fig. 6    eine Draufsicht auf die Gummimetallagerung nach Fig. 5 und

Fig. 7    eine schematische Schnittdarstellung eines inneren Elastomerfilms zur Erklärung der Schichtstärkendimensionierung.

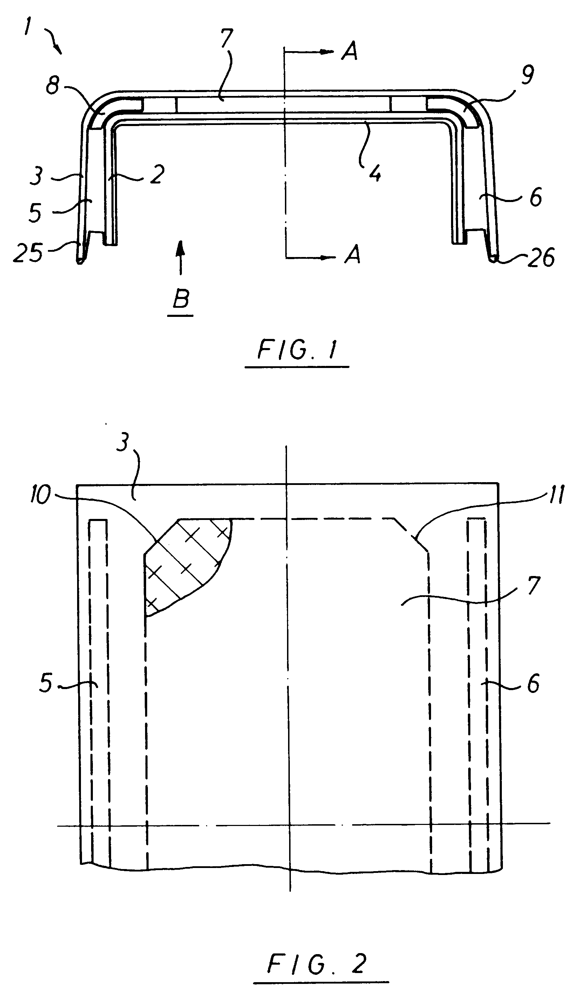

In Fig. 1 ist eine Halbschale 1 in einer Ansicht in Axialrichtung dargestellt, mit einer U-profilförmigen, ersten, inneren Metallschicht 2 und einer zweiten, äußeren Metallschicht 3. An der Innenfläche der ersten Metallschicht 2 ist ein Elastomerfilm 4 fest mit dieser verbunden. Zwischen den Metallschichten 2, 3 sind in den U-Schenkelbereichen seitliche Elastomerschichten 5, 6 und in der U-Basis eine mittlere Elastomerschicht 7 angeordnet. In den Eckbereichen sind diese Elastomerschichten durch Zwischenräume 8, 9 getrennt. Die Längsränder 25 der äußeren Metallschicht 3 überragen die der inneren Metallschicht 2.

Bei der inneren Metallschicht 2 bilden die U-Schenkel und die U-Basis einen rechten Winkel, während die seitlichen Elastomerschichten und die äußere, zweite Metallschicht 3 zu den U-Schenkelrändern hin im dargestellten Herstellzustand konisch auseinanderlaufen.

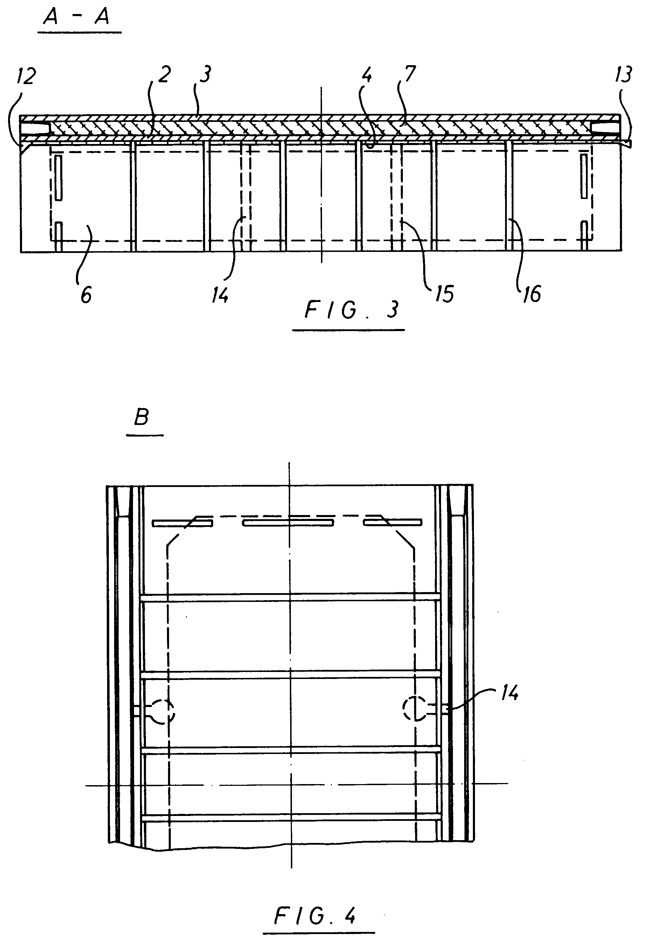

In der Draufsicht der Fig. 2 sind wieder die U-profilförmige, äußere Metallschicht 3, die seitlichen Elastomerschichten 5 und 6 sowie die mittlere Elastomerschicht 7 zu erkennen. Die Elastomerschichten 5, 6, 7 enden innerhalb der stirnseitigen Ränder der Metallschichten 2, 3, wie dies auch aus den Fig. 3 und 4 zu ersehen ist. Die mittlere Elastomerschicht 7 läuft in einer in Querrichtung strukturierten Kontur als Trapezkontur mit seitlichen Abschrägungen 10, 11 aus.

Im Längsschnitt der Fig. 3 sind ebenfalls wieder die innere Metallschicht 2, die äußere Metallschicht 3, der Elastomerfilm 4, die mittlere Elastomerschicht 7 und die seitliche Elastomerschicht 6 zu erkennen. Der Elastomerfilm 4 verläuft bis zu den stirnseitigen Enden der Federschale 1, wo Dichtlippen 12, 13 zur Anlage an einen Biegebalken angeformt sind. In Fig. 3 sind zwei Alternativen dargestellt, wobei die Dichtlippe 12 innerhalb des Bereichs der Metallschicht 2 liegt und die Dichtlippe 13 die Metallschicht 2 in Längsrichtung überragt.

Die erste, innere Metallschicht 2 enthält im Bereich der seitlichen U-Schenkel zwei schlitzförmige, quer zur Längserstreckung verlaufende Unterbrechungen 14, 15, die von der seitlichen Elastomerschicht 6 und dem Elastomerfilm 4 überdeckt sind. Aus der Ansicht von unten gemäß Fig. 4 ist zu ersehen, daß sich die Unterbrechungen 14 in der inneren Metallschicht 2 bis in den Bereich der Ecken des U-Profils bzw. in den Bereich der Ausnehmungen 8, 9 erstrecken.

Der Elastomerfilm 4 ist segmentweise durch Nuten 16 unterteilt, die herstellungsbedingt auf Stützstege in der Vulkanisierform zurückgehen.

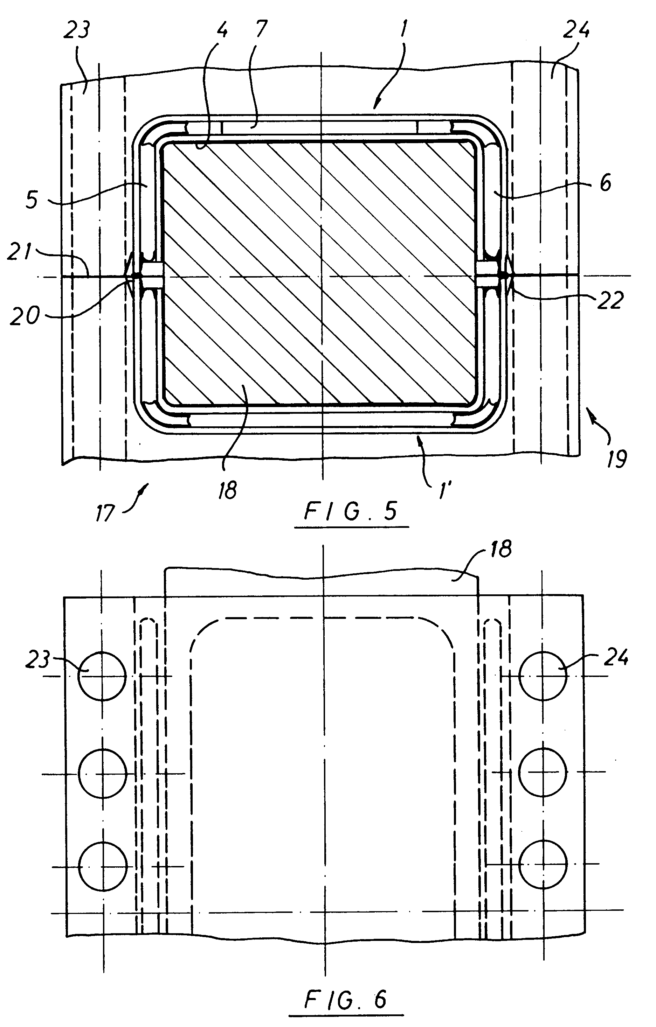

Die Funktion der Halbschalen 1 wird anhand der Fig. 5 und 6 erläutert, die eine Gummimetallagerung 17 für einen Biegebalken 18 im eingebauten Zustand darstellen:

Zwei Halbschalen 1 und 1' umgreifen von oben und unten her den Biegebalken 18. Die Halbschalen 1, 1' sind in ein Gehäuse 19 eingesetzt, wobei das Gehäuse 19 beispielsweise eine ortsfeste Lagerstelle sein kann.

Die Halbschalen 1 und 1' sind an ihren Längsrändern der U-Schenkel durch einen Spalt 20 getrennt. Die Längsränder der äußeren Metallschichten 3 liegen aufeinander und fixieren durch eine damit erzeugte Spannung nach außen die Halbschalen 1, 1' im Gehäuse 19. Zur Vermeidung einer Überbestimmung haben die Längsränder eine Gummiauflage 26 an der Anlagekante.

Der Innenraum des Gehäuses 19 zur Aufnahme der Federhalbschalen 1, 1' ist so dimensioniert, daß einerseits in den mittleren Elastomerschichten 7 und andererseits durch Zusammenpressen des konischen Verlaufs der seitlichen Elastomerschichten 5, 6 jeweils eine Vorspannung aufgebracht wird.

Das Gehäuse 19 ist im Bereich der Spalte 20 an der Linie 21 geteilt und an den Innenrändern zur Montageerleichterung mit Einführschrägen 22 versehen. Nach dem Aufsetzen der beiden Gehäuseteile werden diese durch beidseitig angebrachte Bohrungen 23, 24 über Schraubverbindungen verschraubt.

Dadurch ist der Biegebalken 18 in seinem mittleren Bereich elastisch durch die Vorspannung in den Gummischichten 5, 6, 7 und den reibungserhöhenden Gummifilm 4 gehalten. Bewegungen des Biegebalkens im Einspannbereich werden auch auf die innere Metallschicht 2 übertragen, die durch die Unterbrechungen 14, 15 diese Bewegungen nicht über ihre gesamte Seitenlänge im U-Profil mitmachen muß. Zur Reduzierung der Kantenpressung an den stirnseitigen Enden der Halbschalen 1, 1' sind die seitlichen Abschrägungen 10, 11 in den mittleren Gummischichten 7 vorgesehen, wodurch dort insgesamt weniger Elastomermaterial zur Verfügung steht.

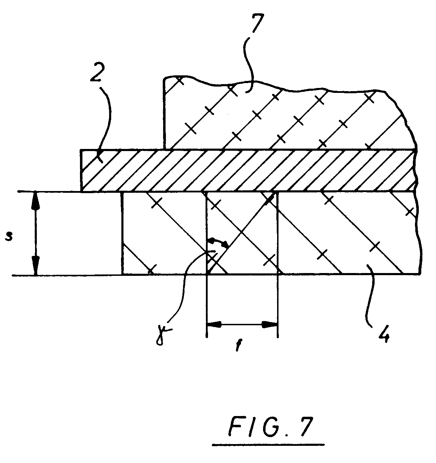

Die durch die Durchbiegung im Einspannbereich auftretende Längenänderung des Biegebalkens 18 muß zur Vermeidung von Relativbewegungen zwischen Biegebalken 18 und Halbschalen 1, 1' im Elastomerfilm 4 aufgenommen werden. Anhand der Fig. 7 wird die Dimensionierung der Schichtstärke erläutert:

Der größte Verformungsweg f bzw. der größte Betriebsschubwinkel $\gamma$ tritt im dargestellten Längsendbereich des Elastomerfilms 4 auf. Damit ergibt sich:

$$\tau_w = \tan \gamma \cdot G = f/s \cdot G$$

$\gamma$ : größter Betriebsschubwinkel
G : Schubmodul
s : Schichtstärke
f : Verformungsweg
$\tau_w$ : Schubwechselspannung für Gummi.

Daraus ergibt sich für die Dimensionierung der Schichtstärke folgende Beziehung:

$$s \geq f/\tau_w \cdot G.$$

Zusammenfassend wird festgestellt, daß mit der vorliegenden Erfindung eine feste und verschleißfreie Lagerung und Halterung eines Biegebalkens zur Verfügung gestellt wird.

**Patentansprüche**

1. Gummimetallagerung für einen Biegebalken mit einem Gehäuse (19) als Halterung, und mit Elastomerkörpern im Gehäuse (19), zwischen denen der Biegebalken (18) kraftschlüssig mit definierter Vorspannung gehalten ist, wobei die Elastomerkörper in zwei Halbschalen (1, 1') aufgenommen sind, die den Biegebalken (18) von unten und oben her übergreifen, die Halbschalen (1, 1') als Gummi-Metallelemente ausgebildet sind mit einer ersten, inneren Metallschicht (2) in der Nähe der Oberfläche des Biegebalkens (18), mit einer zweiten, äußeren, an der Gehäuseinnenwand anliegenden Metallschicht (3) und mit starkvolumigen Elastomerschichten (5, 6, 7) als Elastomerkörper zwischen der ersten und zweiten Metallschicht (2, 3), die mit den Metallschichten (2, 3) fest verbunden sind, und

die starkvolumigen Elastomerschichten (5, 6, 7) in den Schenkelbereichen als seitliche Elastomerschichten (5, 6) und in der Basis der jeweiligen Halbschale als mittlere Elastomerschicht (7) so angeordnet sind, daß in den Eckbereichen Zwischenräume (8, 9) vorgesehen sind,

dadurch gekennzeichnet,

daß das Gehäuse (19) geteilt ist,

daß die beiden Halbschalen (1, 1'), um den im Querschnitt rechteckigen Biegebalken (18) kraftschlüssig mit definierter Vorspannung zu halten, U-profilförmig ausgebildet sind,

daß die als Gummi-Metallelemente ausgebildeten Halbschalen (1, 1') jeweils mit einem zwischen Biegebalkenoberfläche und innerer Metallschicht (2) angeordneten dünnen, mit der inneren Metallschicht (2) fest verbundenen Elastomerfilm (4) versehen sind,

daß keine Verbindung zwischen den jeweils in einer Halbschale (1, 1') angeordneten Elastomerschichten (5, 6, 7) besteht, und

daß die erste innere Metallschicht (2) im Bereich der seitlichen U-Schenkel wenigstens eine schlitzförmige, quer zur Längserstreckung verlaufende Unterbrechung aufweist, die die innere Metallschicht (2) vollständig durchsetzt und an dem der U-Basis abgewandten Ende des jeweiligen U-Schenkelbereichs der inneren Metallschicht (2) offen ausläuft.

2. Gummimetallagerung nach Anspruch 1, dadurch gekennzeichnet, daß sich die wenigstens eine, schlitzförmige Unterbrechung (14, 15) auch über die U-Profilbasis der inneren Metallschicht (2) durchgehend erstreckt, so daß die innere Metallschicht (2) jeder Halbschale (1, 1') aus wenigstens zwei Metallhalbschalen besteht.

3. Gummimetallagerung nach Anspruch 1 oder 2, dadurch gekennzeichnet, daß die erste, innere Metallschicht (2) mit quer zur Längserstreckung des Biegebalkens verlaufenden Sicken versehen ist.

4. Gummimetallagerung nach einem der Ansprüche 1 bis 3, dadurch gekennzeichnet, daß die Längsränder der U-Schenkel der Halbschalen (1, 1') im montierten Zustand im Abstand zueinander liegen und durch einen Spalt (20) getrennt sind.

5. Gummimetallagerung nach Anspruch 4, dadurch gekennzeichnet, daß die Längsränder (25) der äußeren, gegenüberliegenden Metallschichten (3) im Spaltbereich (20) vorstehen und aneinanderliegen.

6. Gummimetallagerung nach einem der Ansprüche 1 bis 5, dadurch gekennzeichnet, daß im Bereich der Längsränder der U-Schenkel das Gehäuse (19) geteilt ist und dort mit Einführschrägen (22) versehen ist.

7. Gummimetallagerung nach einem der Ansprüche 1 bis 6, dadurch gekennzeichnet, daß zur Reduzierung der Kantenpressung an den stirnseitigen Enden der Halbschalen (1, 1') die mittlere Elastomerschicht (7) mit seitlichen Abschrägungen (10, 11) in Querrichtung ausläuft, so daß im stirnseitigen Endbereich jeweils insgesamt weniger Elastomermaterial zur Verfügung steht.

8. Gummimetallagerung nach einem der Ansprüche 1 bis 7, dadurch gekennzeichnet, daß zur Reduzierung der Kantenpressung an den stirnseitigen Enden der Halbschalen (1, 1') die mittlere Elastomerschicht (7) im Herstellzustand zu den Enden hin in ihrer Stärke abnimmt.

9. Gummimetallagerung nach einem der Ansprüche 1 bis 7, dadurch gekennzeichnet, daß das Gehäuse im Längsschnitt gesehen an den Anlageflächen zu den Halbschalen konvex ausgebildet ist und die Elastomerschicht zu den Enden hin sowohl im Herstellzustand als auch im Einbauzustand in ihrer Stärke zunimmt.

10. Gummimetallagerung nach einem der Ansprüche 1 bis 9, dadurch gekennzeichnet, daß die stirnseitigen Enden des Elastomerfilms (4) zu elastischen Dichtlippen (12, 13) geformt sind, die am Biegebalken (18) anliegen und die Dichtlippen (12, 13) innerhalb des Bereichs der inneren Metallschicht (2) liegen oder diese in Längsrichtung überragen.

11. Gummimetallagerung nach einem der Ansprüche 1 bis 10, dadurch gekennzeichnet, daß die seitlichen Elastomerschichten (5, 6) und die entsprechende äußere, zweite Metallschicht (3) zu den U-Schenkelrändern hin konisch auseinanderlaufen und beim Einsetzen in das Gehäuse (19) unter Vorspannung zusammengepreßt werden.

12. Gummimetallagerung nach einem der Ansprüche 1 bis 11, dadurch gekennzeichnet, daß die mittleren Elastomerschichten (7) und die seitlichen Elastomerschichten (5, 6) mit unterschiedlichen Elastomerhärten ausgeführt sind.

**13.** Gummimetallagerung nach einem der Ansprüche 1 bis 12, dadurch gekennzeichnet, daß der innere Elastomerfilm (4) in seiner Schichtstärke so dimensioniert ist, daß folgende Beziehung erfüllt ist:

$$s \geq f/\tau_w \cdot G$$

s : Schichtstärke des Elastomerfilmes (4)

f : Verformungsweg des Elastomerfilmes (4)

$\tau_w$ : Schubwechselspannung für das Elastomer

G : Schubmodul

**Claims**

**1.** Rubber-metal support for a flexible beam, having a housing (19) as a mounting, and having elastomer bodies in the housing (19), between which the flexible beam (18) is held by a force fit with defined prestressing, the elastomer bodies being accommodated in two half-shells (1, 1') which extend over the flexible beam (18) from below and above, the half-shells (1, 1') being designed as rubber-metal elements with a first inner metal layer (2) in the vicinity of the surface of the flexible beam (18), with a second outer metal layer (3), bearing against the housing inner wall, and with high-volume elastomer layers (5, 6, 7) as elastomer bodies between the first and second metal layers (2, 3) which are firmly bonded to the metal layers (2, 3), and the high-volume elastomer layers (5, 6, 7) being arranged in the leg regions as lateral elastomer layers (5, 6) and in the base of the respective half-shell as a central elastomer layer (7) in such a way that interspaces (8, 9) are provided in the corner regions; characterized in that the housing (19) is divided; in that the two half-shells (1, 1') are designed in the form of a U profile in order to hold the cross-sectionally rectangular flexible beam (18) by a force fit with defined prestressing; in that the half-shells (1, 1') designed as rubber-metal elements are in each case provided with a thin elastomer film (4) which is arranged between the flexible beam surface and the inner metal layer (2) and is firmly bonded to the inner metal layer (2); in that there is no connection between the elastomer layers (5, 6, 7) respectively arranged in a half-shell (1, 1'); and in that the first inner metal layer (2) has in the region of the lateral U leg at least one slit-shaped interruption which runs transversely to the longitudinal extent, passes completely through the inner metal layer (2), and runs out openly at the end remote from the U base of the respective U leg region of the inner metal layer (2).

**2.** Rubber-metal support according to Claim 1, characterized in that the at least one slit-shaped interruption (14, 15) also extends continuously over the U profile base of the inner metal layer (2) so that the inner metal layer (2) of each half-shell (1, 1') comprises at least two metal half-shells.

**3.** Rubber-metal support according to Claim 1 or 2, characterized in that the first, inner metal layer (2) is provided with beads running transversely to the longitudinal extent of the flexible beam.

**4.** Rubber-metal support according to one of Claims 1 to 3, characterized in that, in the fitted state, the longitudinal edges of the U legs of the half-shells (1, 1') lie at a distance from each other and are separated by a gap (20).

**5.** Rubber-metal support according to Claim 4, characterized in that the longitudinal edges (25) of the outer opposing metal layers (3) project and lie against each other in the gap region (20).

**6.** Rubber-metal support according to one of Claims 1 to 5, characterized in that, in the region of the longitudinal edges of the U legs, the housing (19) is divided and is provided there with insertion bevels (22).

**7.** Rubber-metal support according to one of Claims 1 to 6, characterized in that, for reducing the edge pressure on the end faces of the half-shells (1, 1'), the central elastomer layer (7) runs out with lateral bevellings (10, 11) in the transverse direction, so that in the region of the end face there is altogether less elastomer material available in each case.

**8.** Rubber-metal support according to one of Claims 1 to 7, characterized in that, for reducing the edge pressure on the end faces of the half-shells (1, 1'), the central elastomer layer (7), in the state in which it is produced, decreases in its thickness towards the ends.

**9.** Rubber-metal support according to one of Claims 1 to 7, characterized in that seen in longitudinal section the housing is of a convex design on the bearing faces with respect to the half-shells, and the elastomer layer both in the state in which it is produced and in the state in which it is installed increases in its thickness towards the ends.

10. Rubber-metal support according to one of Claims 1 to 9, characterized in that the end faces of the elastomer film (4) are shaped to form flexible sealing lips (12, 13) which bear against the flexible beam (18), and the sealing lips (12, 13) lie within the region of the inner metal layer (2) or protrude beyond the latter in the longitudinal direction.

11. Rubber-metal support according to one of Claims 1 to 10, characterized in that the lateral elastomer layers (5, 6), and the corresponding outer second metal layer (3), diverge conically towards the U leg edges and during fitting into the housing (19) are pressed together under prestressing.

12. Rubber-metal support according to one of Claims 1 to 11, characterized in that the central elastomer layers (7) and the lateral elastomer layers (5, 6) are made with different elastomer hardnesses.

13. Rubber-metal support according to one of Claims 1 to 12, characterized in that the inner elastomer film (4) is dimensioned in its layer thickness in such a way that the following relationship is satisfied:

$$s \geq f/\tau_w \cdot G$$

    s :     Layer thickness of the elastomer film (4)

    f :     Strain path of the elastomer film (4)

    $\tau_w$ :     Alternating shear stress for the elastomer

    G :     Shear modulus

## Revendications

1. Support caoutchouc-métal pour une poutre de flexion comprenant

un boîtier (19) en tant que support,

des corps en élastomère dans le boîtier (19), entre lesquels la poutre de flexion (18) est tenue par adhérence avec une précontrainte définie,

les corps en élastomère étant logés dans deux demi-coques (1, 1'), qui enserrent la poutre de flexion (18) par le dessus et le dessous,

les deux demi-coques (1, 1') étant constituées en éléments caoutchouc-métal comportant une première couche de métal intérieure (2) à proximité de la surface de la poutre de flexion (18), une deuxième couche de métal extérieure (3) contiguë à la paroi interne du boîtier et des couches d'élastomère de grand volume (5, 6, 7), qui sont réalisées sous la forme de corps en élastomère, entre les première et deuxième couches de métal (2,3), et qui sont reliées solidement aux couches de métal (2,3), et

les couches d'élastomère de grand volume (5, 6, 7) étant disposées au niveau des flancs de chaque demi-coque en tant que couches d'élastomère latérales (5, 6) et à la base de la demi-coque respective en tant que couche d'élastomère médiane (7), de telle sorte que des interstices (8, 9) sont prévus au niveau des angles,

caractérisé en ce que

le boîtier (19) est divisé,

les deux demi-coques (1,1'), afin de tenir par adhérence la poutre de flexion (18) de section rectangulaire avec une précontrainte définie, sont constituées en forme de profil en U,

les deux demi-coques (1, 1') constituées en éléments caoutchouc-métal sont munies chacune d'un film élastomère mince (4) placé entre une surface de la poutre de flexion et la couche de métal intérieure (2), et relié solidement à la couche de métal intérieure (2),

aucune jonction n'est présente entre les couches d'élastomère (5, 6, 7) placées dans une demi-coque (1,1') respective, et

la première couche de métal intérieure (2) présente au niveau des flancs latéraux du U au moins une interruption en forme d'entaille qui s'étend en travers de la direction longitudinale, traverse complètement la couche de métal intérieure (2) et s'ouvre à l'extrémité, éloignée de la base du U, de chaque région formant les flancs du U de la couche métallique intérieure (2).

2. Support caoutchouc-métal selon la revendication 1, caractérisé en ce que l'interruption en forme d'entaille (14,15) qui est au moins présente s'étend également de manière continue sur la base du profil en U de la couche de métal (2), de sorte que la couche de métal intérieure (2) de chaque demi-coque (1, 1') est constituée d'au moins deux demi-coques métalliques.

3. Support caoutchouc-métal selon la revendication 1 ou 2, caractérisé en ce que la première couche de métal intérieure (2) est munie de moulures transversales par rapport à la direction longitudinale de la poutre de flexion.

4. Support caoutchouc-métal selon l'une quelconque des revendications 1 à 3, caractérisé en ce que les arêtes longitudinales des flancs du U des demi-coques (1,1') sont espacées à l'état monté et sont séparées par une fente (20).

5. Support caoutchouc-métal selon la revendication 4, caractérisé en ce que les arêtes longitudinales (25) des couches de métal (3) extérieures opposées font saillie dans la fente (20) et sont contigues les unes aux autres.

6. Support caoutchouc-métal selon l'une quelconque des revendications 1 à 5, caractérisé en ce que le boîtier (19) est divisé au niveau des arêtes longitudinales des flancs du U et est muni dans cette zone de biseaux d'insertion (22).

7. Support caoutchouc-métal selon l'une quelconque des revendications 1 à 6, caractérisé en ce que, pour réduire la pression sur les arêtes aux extrémités frontales des demi-coques (1,1'), la couche d'élastomère médiane (7) se termine dans le sens transversal par des biseaux latéraux (10, 11), de sorte qu'il y a au total moins de matière d'élastomère dans chaque zone d'extrémité frontale.

8. Support caoutchouc-métal selon l'une quelconque des revendications 1 à 7, caractérisé en ce que, pour réduire la pression sur les arêtes aux extrémités frontales des demi-coques (1,1'), la couche d'élastomère médiane (7), à l'état de fabrication, diminue d'épaisseur en direction des extrémités.

9. Support caoutchouc-métal selon l'une quelconque des revendications 1 à 7, caractérisé en ce que le boîtier, vu en coupe longitudinale, est réalisé de manière convexe au niveau des surfaces d'appui sur les demi-coques, et la couche d'élastomère augmente d'épaisseur en direction des extrémités aussi bien à l'état de fabrication que dans l'état monté.

10. Support caoutchouc-métal selon l'une quelconque des revendications 1 à 9, caractérisé en ce que les extrémités frontales du film d'élastomère (4) sont formées pour constituer des lèvres élastiques d'étanchéité (12,13) qui s'appuient sur la poutre de flexion (18) et qui se trouvent dans la zone de la couche de métal intérieure (2) ou dépassent de celle-ci dans le sens longitudinal.

11. Support caoutchouc-métal selon l'une quelconque des revendications 1 à 10, caractérisé en ce que les couches d'élastomère latérales (5,6) et la deuxième couche de métal extérieure (3) divergent en direction des arêtes des flancs du U et sont compressées sous précontrainte lors de l'installation dans le boîtier (19).

12. Support caoutchouc-métal selon l'une quelconque des revendications 1 à 11, caractérisé en ce que les couches d'élastomère médiane (7) et latérales (5,6) sont réalisées dans différentes duretés d'élastomère.

13. Support caoutchouc-métal selon l'une quelconque des revendications 1 à 12, caractérisé en ce que le film d'élastomère intérieur (4) est dimensionné en épaisseur de telle manière que la relation suivante soit satisfaite :

$$s \geq f/\tau_w \cdot G$$

s : épaisseur du film élastomère (4)
f : longueur de déformation du film élastomère (4)
$\tau_w$ : contrainte alternative de cisaillement pour l'élastomère
G : module de cisaillement.

FIG. 1

FIG. 2

9

A – A

FIG. 3

B

FIG. 4

_F I G . 5_

_F I G . 6_

FIG. 7